# EUROPEAN PATENT APPLICATION

(11) **EP 1 260 138 A1**
(43) Date of publication of application: **27.11.2002**
(21) Application number: 02394056.2
(22) Date of filing: 07.05.2002
(51) Int. Cl.: A01K 89/01

(54) **Spinning reel rotor**

(30) Priority: 22.05.2001 JP 2001152267; 25.05.2001 JP 2001157004
(71) Applicant: Shimano Inc., Osaka 590-8577 (JP)
(72) Inventor: Hitomi, Yasuhiro, Hashimoto-shi, Wakayama 648-0092 (JP)
(74) Representative: Purdy, Hugh Barry

(57) **Abstract**

A rotor (3) includes a rotor unit (15), a bail arm (16) and a cover member (17,117). The Rotor unit includes a cylindrical portion (20) made of synthetic resin, and first and second rotor arms (21,22) having first and second connection portions (21a, 22a) that extend radially outward from a rear end of the cylindrical portion, and first and second arm portions (21b, 22b) that extend frontward curving from the first and second connection portions and keeping a certain distance to the cylindrical portion. The bail arm guides fishing line to the spool with its first rotor arm side, and is mounted pivotably with respect to the first and second rotor arms. The cover member, which reinforces the rotor unit and is made of a material that is stronger than that of the rotor unit, is disposed on an outer side of the first rotor arm, such that a hollow can be formed inside it. With the present invention, the weight of the rotor can be reduced while maintaining its strength. A spinning reel including a rotor according to the invention is also described.

## Description

This invention generally relates to rotors. More specifically, the present invention relates to spinning reel rotors, which are rotatively attached to a reel unit of a spinning reel and for winding fishing line around a spool that can shift back and forth.

Spinning reels typically include a reel unit, a rotor and a spool. The reel unit is mounted to a fishing rod. The rotor is mounted rotatively to the reel unit and is for guiding the fishing line. The spool is for winding fishing line that has been guided to it by the rotor. The rotor includes a rotor unit mounted rotatively to the reel unit, and a bail arm mounted pivotably to the rotor unit.

The rotor unit includes a cylindrical portion mounted rotatively to the reel unit, and first and second rotor arms having first and second connection portions and first and second arm portions. The first and second connection portions extend radially outward from the rear end of the cylindrical portion, and the first and second arm portions extend frontward, curving from the first and second connection portions and keeping a certain distance to the cylindrical portion. At the rear end of the cylindrical potion, there is a ring-shaped large-diameter portion, whose diameter is larger than that of the other portions, and the first and second connection portions extend radially outward at opposing positions of the outer circumferential surface of the large-diameter portion.

The bail arm is mounted to the first and second rotor arms, and is pivotable between a line-winding posture and a line-releasing posture. When in the line-winding posture, the bail arm guides fishing line and winds it around the spool. The bail arm includes first and second bail support members mounted pivotably to the first and second rotor arms, a line roller mounted rotatively to the front end of the first bail support member, and a bail connecting the first bail support member with the second bail support member and guiding the fishing line to the line roller.

In this type of spinning reel, when the handle is turned, the rotor rotates, and fishing line, which is guided by the bail arm to the spool, is wound around the spool.

For such a spinning reel rotor, a reduction of the weight is desirable, in order to improve the rotational balance and facilitate handling during casting. When the weight of the rotor is reduced, the flexural strength between the connection portions and the arm portions, and in particular the flexural strength between the first connection portion on the fishing line guiding side, to which the line roller is mounted, and the first arm portion, poses a limitation. More specifically, the force acting on the line roller during the winding of fishing line creates a force that spreads the first arm portion to the outside. In order to maintain a strength that can withstand this force, the wall thickness of the first connection portion and the first arm portion has to be thick. For this reason, it is difficult to reduce the weight of this portion.

In view of the above, there exists a need for a spinning reel rotor which overcomes the above mentioned problems in the prior art. This invention addresses this need in the prior art as well as other needs, which will become apparent to those skilled in the art from this disclosure.

### SUMMARY OF THE INVENTION

It is an object of the present invention to provide a spinning reel rotor whose weight can be reduced while maintaining its strength.

According to a first aspect of the present invention, a spinning reel rotor, which is rotatively attached to a reel unit of a spinning reel and winds fishing line around a spool that can shift back and forth, includes a rotor unit, a bail arm and a cover member. The rotor unit includes a cylindrical portion made of synthetic resin, which is rotatable with respect to the reel unit, and first and second rotor arms including first and second connection portions extending radially outward from opposing positions at an outer circumferential surface of a rear end of the cylindrical portion, and first and second arm portions that extend frontward curving from the first and second connection portions and keeping a certain distance to the cylindrical portion. The bail arm is for guiding fishing line to the spool on a first rotor arm side, and is mounted pivotably with respect to front ends of the first and second rotor arms. The cover member, which is for reinforcing the rotor unit and is made of a material that is stronger than that of the rotor unit, is disposed at least on an outer side of the first rotor arm, such that a hollow can be formed inside.

In this rotor, the rotor unit is made of a synthetic resin, so that it can be made lighter than a metal rotor unit. However, since synthetic resins have weak strength, the wall thickness of the rotor arms has to be increased in order to maintain flexural strength. To address this issue, the outer side of the first rotor arm on which the force acts during the winding of line is covered by a cover member made of a material with high strength, thus reinforcing the first rotor arm. The cover member covers the first connection portion and the first arm portion from the outside, and a hollow is formed inside it, so that it is formed by three-dimensional bending. Therefore, when the force acts on the first rotor arm, a tensile force acts on the cover member instead of a compression force, so that it does not deform easily. At least the first rotor arm portion, which is susceptible to forces from the rotor unit, is reinforced by the cover member, so that the acting forces can be received by the cover member, and the wall thickness of the rotor unit can be reduced, reducing its flexural strength. Thus, the rotor can be made lighter while maintaining its strength.

According to a second aspect of the present invention, in a spinning reel rotor as in the first aspect of the invention, the bail arm includes first and second bail support members mounted pivotably to the front ends of the first and second bail arm portions respectively, a line roller for guiding fishing line, which is mounted rotatively to a front end of the first bail support member, and a bail, which connects the first bail support member and the second bail support member and guides fishing line to the line roller, and the cover member is disposed on an outer side of the first connection portion and the first arm portion of the first rotor arm. With this configuration, only the first rotor arm, on which the forces act, is provided with a reinforcing cover member, and a decorative light-weight cover member can be provided on the second rotor arm, thus making the rotor even lighter.

According to a third aspect of the present invention, in a spinning reel rotor as in the second aspect of the invention, the cover member is disposed also on an outer side of the second connection portion and the second arm portion of the second rotor arm. With this configuration, also the second rotor arm is provided with a cover member, facilitating the rotational balance of the rotor.

According to a fourth aspect of the present invention, in a spinning reel rotor as in any of the first to third aspects of the invention, the cover member is formed such that it also covers a rear surface of the cylindrical portion. With this configuration, the cover member is formed so as to cover a rear surface of the cylindrical portion, so that an even higher flexural strength of the cover member can be maintained.

According to a fifth aspect of the present invention, in a spinning reel rotor as in any of the first to fourth aspects of the invention, the cover member is made of a metal, wherein "metal" includes stainless alloys and aluminum alloys. With this configuration, it is easier to keep the flexural strength of the cover member high. Furthermore, the corrosion resistance of the cover member can be improved in the case of stainless alloys, whereas the die-casting process is facilitated in the case of aluminum alloys, so that a variety of shapes can be adopted.

According to a sixth aspect of the present invention, in a spinning reel rotor as in any of the first to fourth aspects of the invention, the cover member is made of a fiber reinforced resin, wherein "fiber" includes carbon fibers and glass fibers. With this configuration, an even lighter weight can be attained while maintaining the flexural strength.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a lateral view of a spinning reel in accordance with a first embodiment of the present invention;
Figure 2 is a lateral cross-sectional view of the spinning reel in accordance with the first embodiment of the present invention;
Figure 3 is an exploded perspective view of the rotor in accordance with the first embodiment of the present invention;
Figure 4 is a cross-sectional view of the rotor in accordance with the first embodiment of the present invention viewed along line IV - IV in Fig. 1;
Figure 5 is a cross-sectional view of the rotor in accordance with the first embodiment of the present invention viewed along line V - V in Fig. 1;
Figure 6 is an exploded perspective view of the rotor corresponding to Fig. 3, in accordance with a second embodiment of the present invention;
Figure 7 is an exploded perspective view of the rotor corresponding to Fig. 3, in accordance with a third embodiment of the present invention;
Figure 8 is an exploded perspective view of the rotor corresponding to Fig. 4, in accordance with a fourth embodiment of the present invention;
Figure 9 is an exploded perspective view of the rotor corresponding to Fig. 5, in accordance with the fourth embodiment of the present invention;
Figure 10 is an exploded perspective view of the rotor corresponding to Fig. 4, in accordance with a fifth embodiment of the present invention;
Figure 11 is an exploded perspective view of the rotor corresponding to Fig. 5, in accordance with the fifth embodiment of the present invention;
Figure 12 is an exploded perspective view of the rotor corresponding to Fig. 3, in accordance with a sixth embodiment of the present invention;
Figure 13 is an exploded perspective view of the rotor corresponding to Fig. 4, in accordance with the sixth embodiment of the present invention;
Figure 14 is a lateral cross-sectional view of the relevant rotor parts in accordance with a seventh embodiment of the present invention;
Figure 15 is a rear view of the relevant rotor parts in accordance with an eighth embodiment of the present invention;
Figure 16 is a magnified cross-sectional view of a spool in accordance with a ninth embodiment of the present invention;
Figure 17 is a magnified cross-sectional view of a spool in accordance with a tenth embodiment of the present invention; and
Figure 18 is a magnified cross-sectional view of a spool in accordance with an eleventh embodiment of the present invention.

### DETAILED DESCRIPTION OF THE PREFERRED EMBODIMENTS

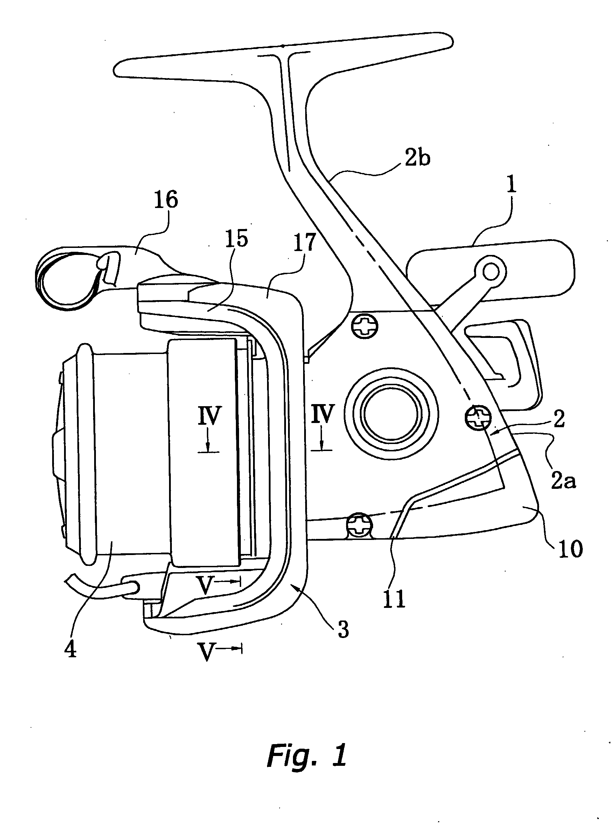

As shown in Fig. 1, a spinning reel in accordance with a first embodiment of the present invention includes a reel unit 2, a rotor 3 disposed at the front of the reel unit 2, and a spool 4 disposed at the front of the rotor 3. Then reel unit 2 has a handle 1 and is mounted to a fishing rod. The rotor 3 is rotatively mounted to the reel unit 2. The spool 4 can shift back and forth with respect to the reel unit 2.

The reel unit 2, which is made of a magnesium alloy for example, includes a reel body 2a and a roughly T-shaped rod attachment leg 2b extending upward in Fig. 1 from the reel body 2a. A rotation transmission mechanism (not shown in the drawings) for transmitting rotation of the handle 1 to the rotor 3 and an oscillating mechanism (not shown in the drawings) for shifting the spool 4 back and forth in synchronization with the handle 1 rotating the rotor 3 are provided inside the reel body 2a. At the lower rear end of the reel body 2a, there is a protrusion protruding rearward for accommodating the oscillating mechanism. In order to prevent the damaging of this protrusion, a cover plate 10 made of a hard metal such as a stainless alloy is fitted to it. An insulating member 11 made of a synthetic resin is fitted between the cover plate 10 and the reel body 2a, in order to prevent electrolytic corrosion of the reel unit 2.

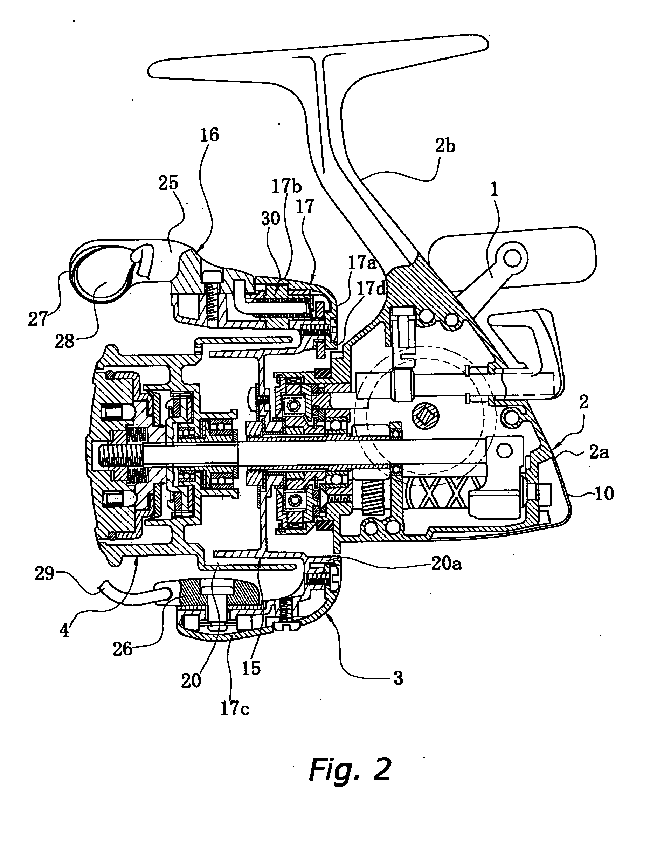

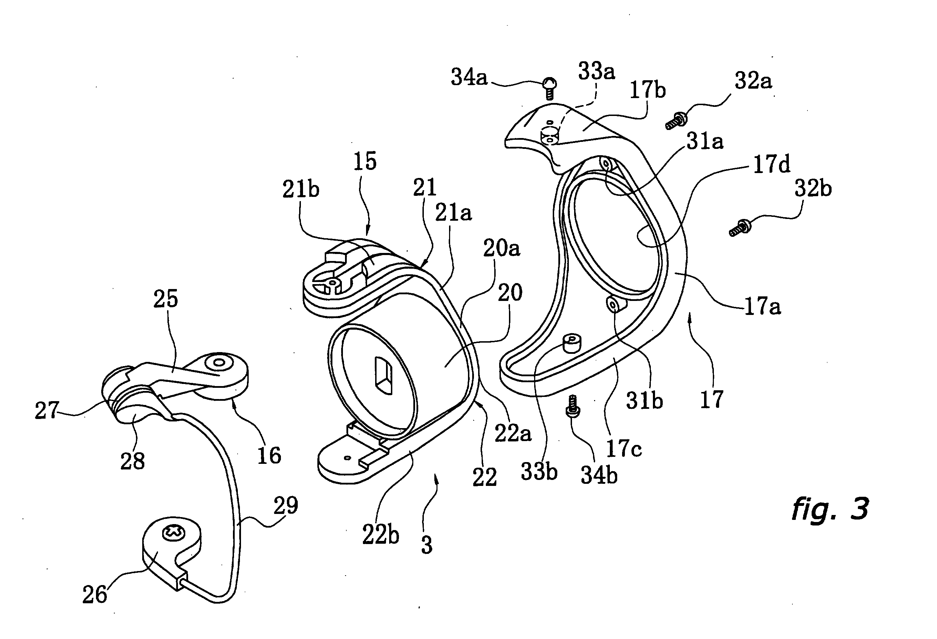

As shown in Figs. 2 and 3, the rotor 3 includes a rotor unit 15, a bail arm 16 and a reinforcing cover member 17. The rotor unit 15 is mounted rotatively to the reel unit 2. The bail arm 16 is mounted pivotably to the front end of the rotor unit. The cover member 17 is mounted detachably to the lateral surface at the rear end of the rotor unit 15.

The rotor unit 15, which is made of a synthetic resin such as Nylon 66 for example, includes a cylindrical portion 20, and first and second rotor arms 21 and 22 formed in one piece with the cylindrical portion 20. These components are made with thin walls, in order to achieve a lighter weight. The cylindrical portion 20, which is mounted rotatively to the reel unit 2, includes at its rear end a ring-shaped large-diameter portion 20a whose diameter is larger than that of the other components.

The first and the second rotor arms 21 and 22 are formed in one piece with the large-diameter portion 20a, at opposite positions on the outer circumferential surface of the large-diameter portion 20a. The first and second rotor arms 21 and 22 respectively include first and second connection portions 21a and 22a extending radially outward from the large-diameter portion 20a at opposite positions on the outer circumferential surface of the large-diameter portion 20a, and first and second arm portions 21b and 22b curving out and extending frontward from the first and second connection portions 21a and 22a, keeping a certain distance to the cylindrical portion 20.

The first and the second connection portions 21a and 22a which protrude from the outer circumferential surface of the large-diameter portion 20a, tapering off radially, are curved and connected to the first and second arm portions 21b and 22b. A rim protruding outward is formed at the outer lateral faces of the first and second connection portions 21a and 22a and the first and second arm portions 21b and 22b, and a hollow is formed in the outer lateral portion enclosed by the rim portion. A bail tripping mechanism 30, which holds the bail arm 16 in a line-winding posture or a line-releasing posture and restores the bail arm 16 from the line-releasing posture to the line-winding posture, is provided in the outer hollow at the first rotor arm portion 21.

Of the first and the second connection portions 21a and 22a and the first and second arm portions 21b and 22b, a large force acts on the curved portion between the first connection portion 21a and the first arm portion 21b when the first rotor arm 21 tries to spread outward while winding up line. However, since this force is received by the cover member 17, the wall thickness of this portion can be made thinner than conventionally, and a lighter weight can be attained.

The purpose of the bail arm 16 is to guide fishing line to the spool 4. The bail arm 16 includes first and second bail support members 25 and 26 mounted pivotably to the front ends of the first and second rotor arms 21 and 22, respectively, a line roller 27 mounted rotatively to the front end of the first bail support member 25, and a curved bail 29 made of a wire. The first bail support member 25 includes a fixed shaft cover 28 flanking the line roller 27, and the bail 29 links the fixed shaft cover 28 and the second bail support member 26.

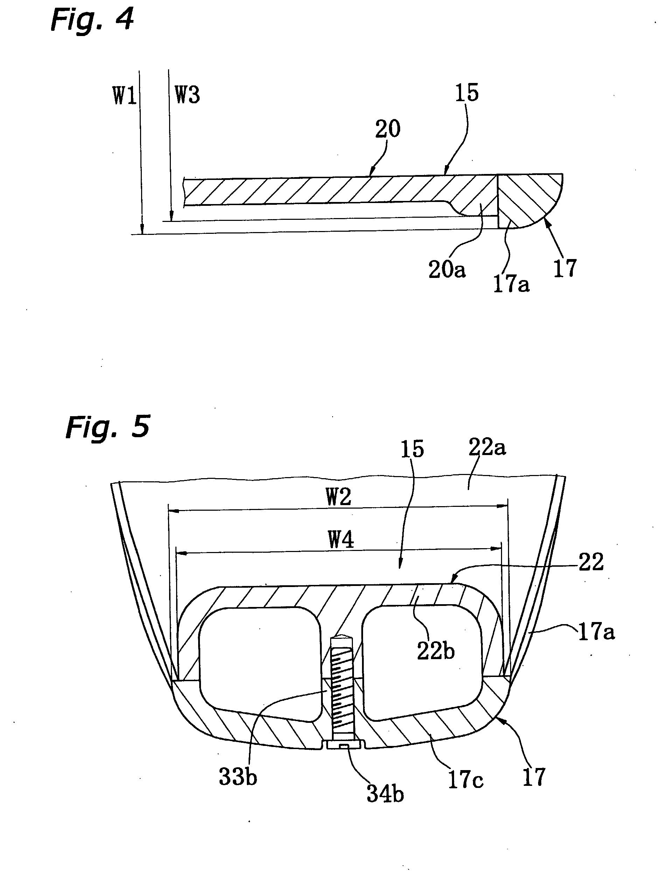

The cover member 17 reinforces the rotor unit 15 whose flexural strength is weakened by making its walls thin to reduce weight, and covers the portions of the rotor 3 that are prone to contact with other objects, thus protecting the rotor 3 and keeping it from being damaged. The cover member 17 is made of a material that is stronger than the rotor unit 15, such as a stainless alloy or an aluminum alloy, and has high flexural strength. The cover member 17 can be mounted from the rear side (right side in Fig. 2) to the rotor unit 15, such that the cover member 17 covers the outer lateral space of the first and the second rotor arms 21 and 22. As shown in Figs. 4 and 5, the cover member 17 is mounted to the rotor unit 15 with its curved edges fitted against the edges of the rotor unit 15, and is three-dimensionally curved so that a hollow can be formed inside.

The cover member 17 includes a first cover portion 17a and a pair of second cover portions 17b and 17c. The first cover portion 17a covers the outer circumferential surface and the rear surface of the large-diameter portion 20a, and the outer lateral surfaces of the first and second connection portions 21a and 22a. The pair of second cover portions 17b and 17c extends frontward from both ends of the first cover portion 17a and covers the outer lateral surface of the first and second arm portions 21b and 22b. A circular aperture 17d, into which the rear end face of the cylindrical portion 20 is fitted, is formed in the middle of the first cover portion 17a. The first cover portion 17a is provided with boss portions 31a and 31b having through holes, flanking the aperture 17d. The first cover portion 17a is fastened to the rotor unit 15 with small screws 32a and 32b inserted into the boss portions 31a and 31b. Also in the second cover portions 17b and 17c, boss portions 33a and 33b with through holes are formed, and they are fastened to the rotor unit 15 with small screws 34a and 34b inserted into the boss portions 33a and 33b.

The width-direction edges of the portions of the first cover portion 17a and the second cover portion 17b that cove the rotor unit 15 are, as shown in Fig. 4 (first cover portion 17a) and Fig. 5 (second cover portion 17c), protrude beyond the two width-direction edges of the rotor unit 15 in a cross-section that intersects with the surface. More specifically, the width dimensions W1 and W2 of the first cover portion 17a and the second cover portions 17b and 17c are 1 mm larger than the width dimensions W3 and W4 of the large-diameter portion 20a of the rotor unit 15 and the rotor arm 22. With these dimensions, the first and the second cover portions 17a, 17b, and 17c protrude 0.5 mm at both sides from the rotor unit 15. It is preferable that the difference between the dimensions W1 and W2 is in the range of 0.5 mm to 6 mm. If the difference between the dimensions W1 and W2 of the first and second cover portions 17a, 17b, and 17c and the dimensions W3 and W4 of the rotor unit 15 is less than 0.5 mm, then the first and the second cover portions 17a, 17b, and 17c protrude only by 0.25 mm at both sides. In that case, the level difference to the rotor unit 15 becomes too small, so that the components of the rotor unit 15 are prone to contact with other object. On the other hand, if the difference between the dimensions W1 and W2 and the dimensions W3 and W4 exceeds 6 mm, then the protrusion at both sides becomes too large, which makes the level difference portion conspicuous and unattractive, and leads to accumulation of foreign matter such as dirt in the level difference portion.

The spool 4 is a cylindrical member with a brim, around which the fishing line is wound. The spool 4 is shifted back and force in synchronization with the rotation of the rotor 3, such that fishing line that is guided by the bail arm 16 is wound substantially uniformly around the outer circumferential surface of the spool 4.

With a spinning reel thus configured, a cover member 17 with high flexural strength covers and reinforces the curved portion of the connection portions 21a and 22a. Therefore, the first rotor arm 21 does not spread even when a force acts on the line roller 27 in the direction spreading the first rotor arm 21 during the winding of line. Consequently, a sufficient flexural strength can be ensured for the overall rotor, even when the flexural strength of the rotor unit 15 is reduced by making its walls thinner. Moreover, the cover member 17 covers the rotor unit 15 and protrudes from the rotor unit 15, so that the rotor unit 15 is not prone to contact with other objects and is less easily damaged. Therefore, the flexural strength of the overall rotor is maintained at a sufficient level, even when the flexural strength of the rotor unit 15 is reduced by making the rotor unit 15 from synthetic resin in order to reduce the weight of the rotor 3.

### Other Embodiments

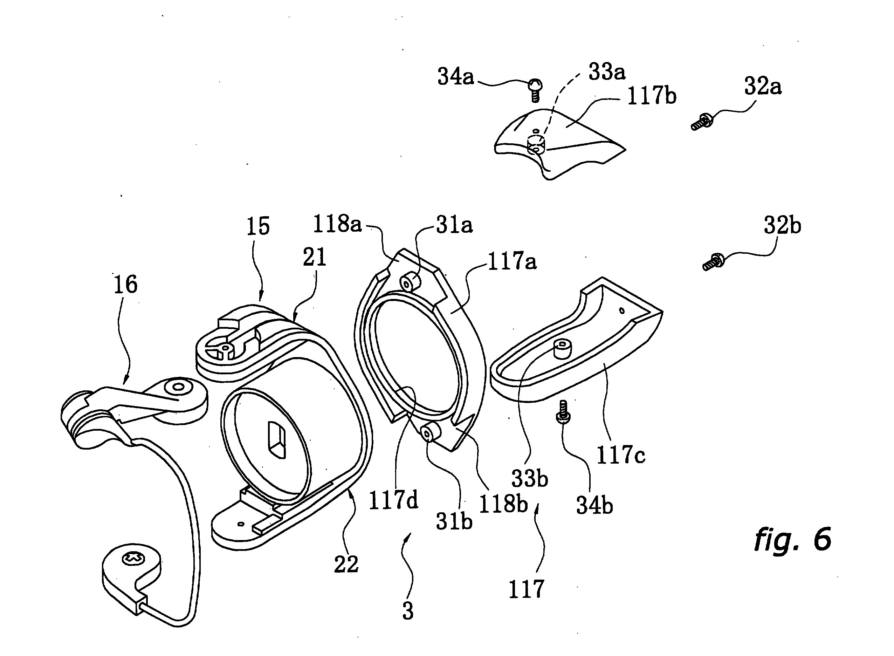

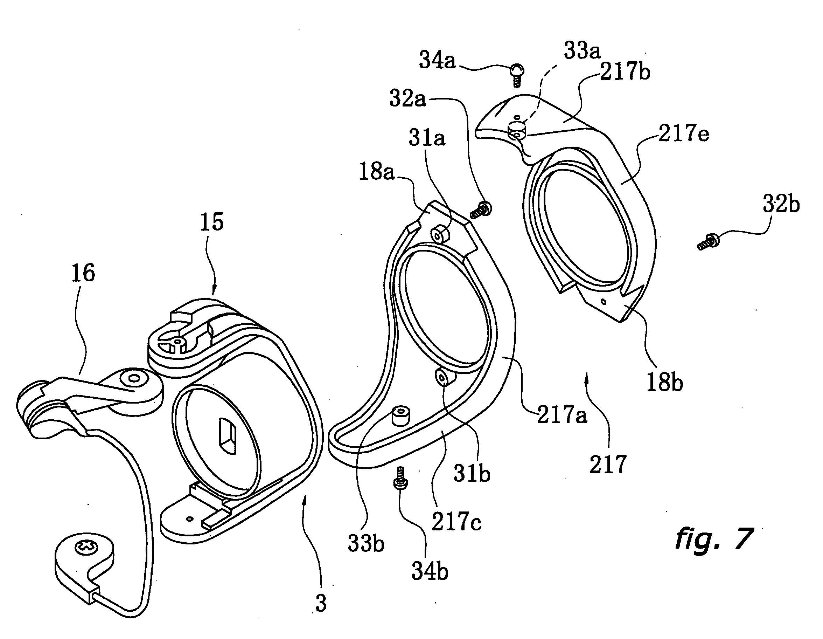

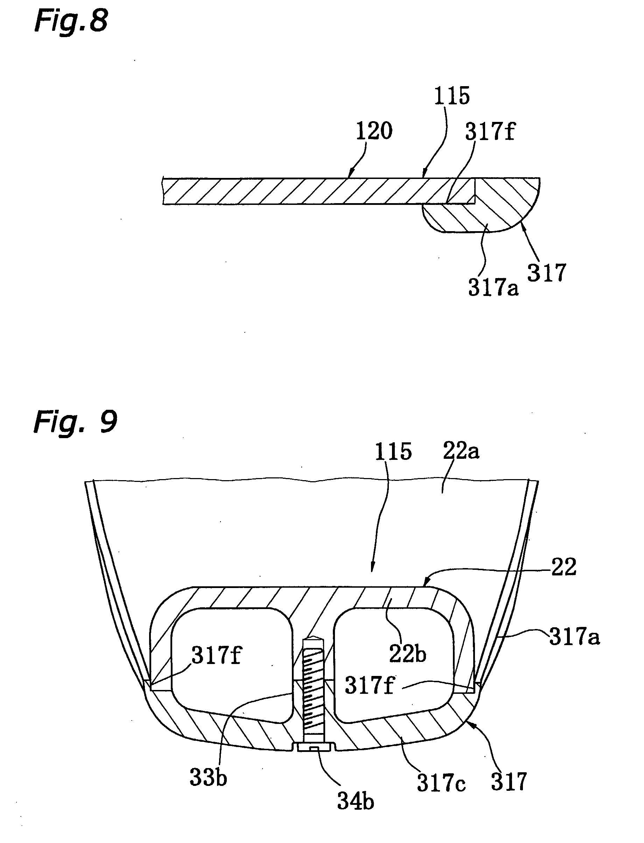

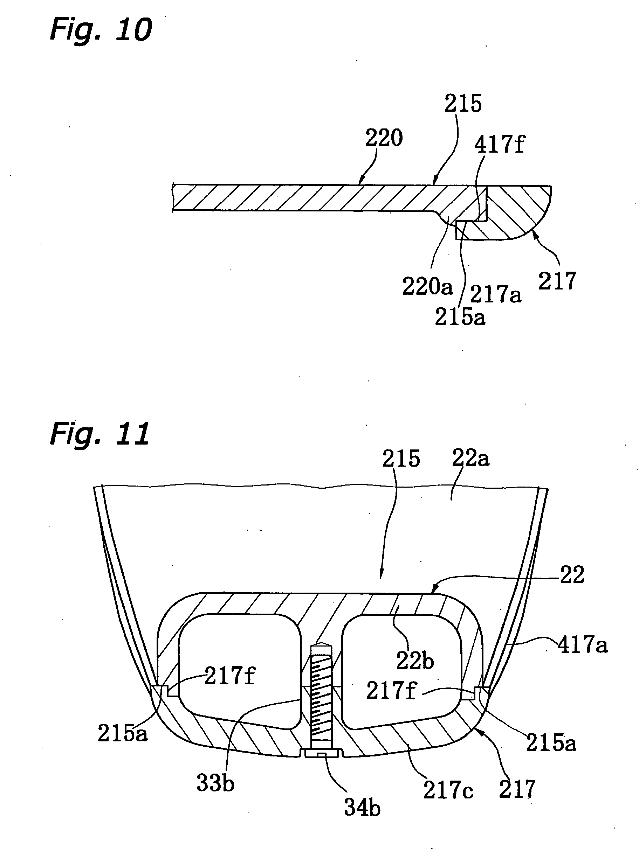

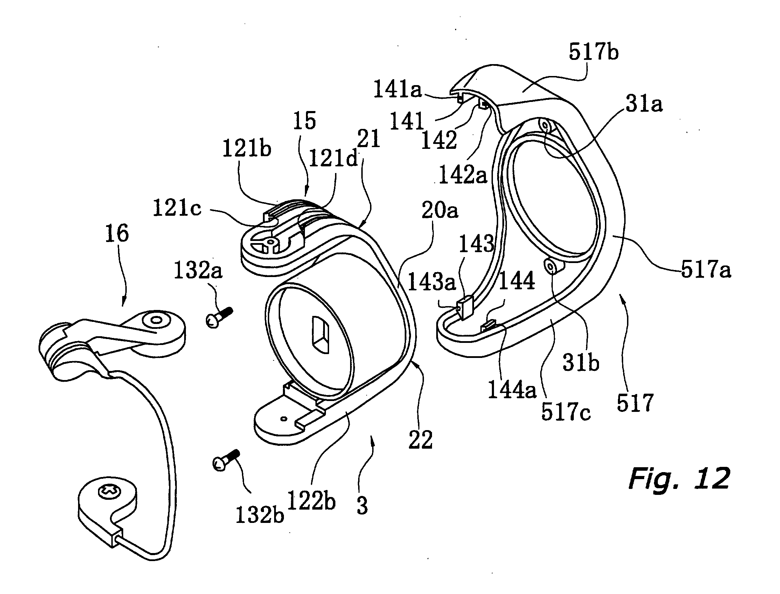

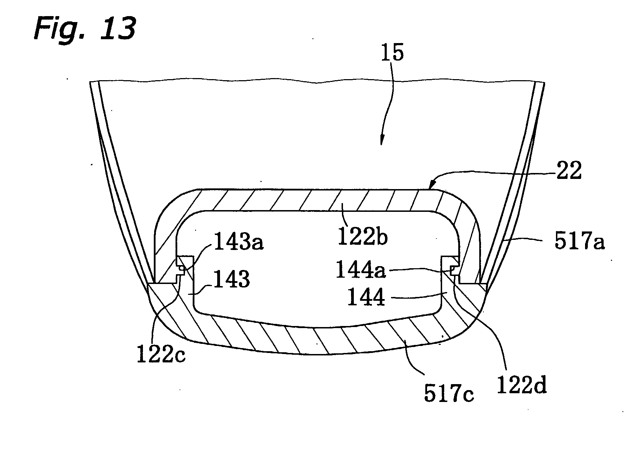

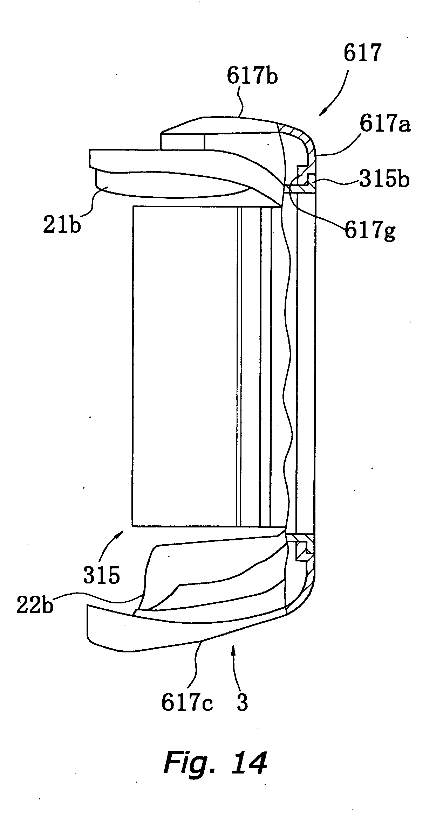

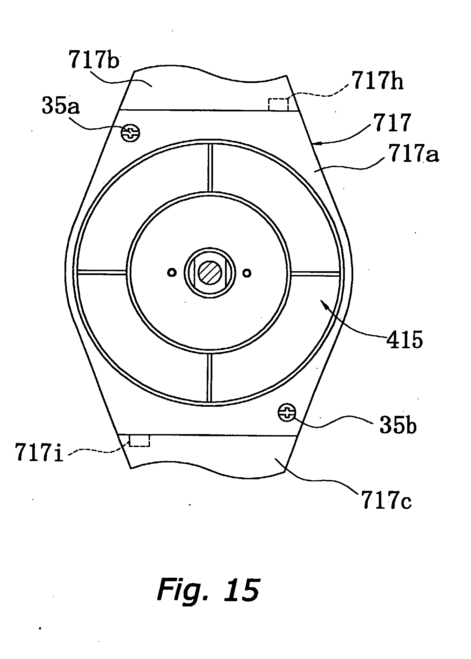

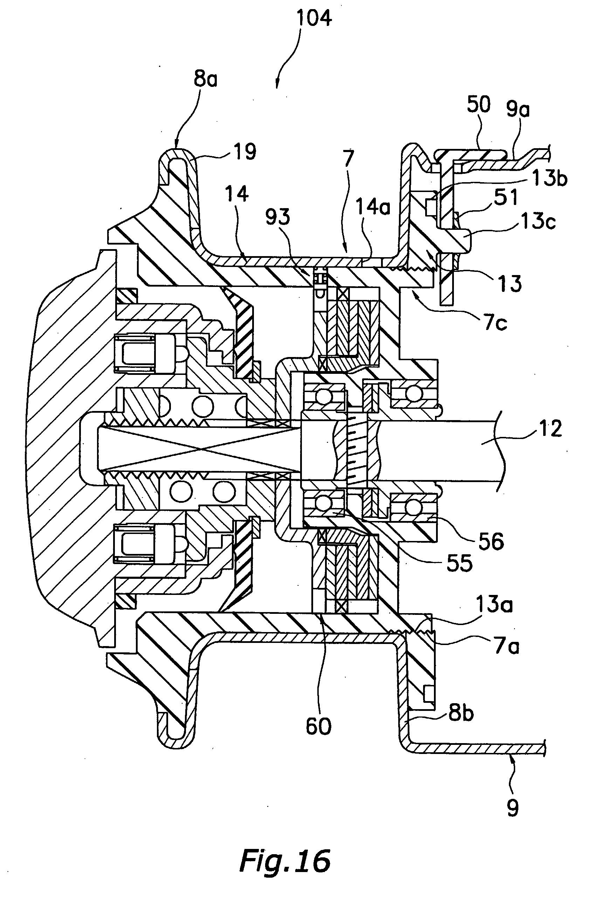

(a) In the preceding embodiment, the first cover portion 17a and the pair of second cover portions 17b and 17c are formed in one piece, but as shown in Fig. 6, they can also be formed separately. In that case, first and second ears 118a and 118b can be formed protruding outward at both ends of the first cover portion 117a, the first cover portion 117a can be fastened to the rotor unit 15, and the second cover portions 117b and 117c can be fastened to the connection portions 21a and 22a and to the arm portions 21b and 22b, covering the ear portions 118a and 118b. For this reason, the ear portions 118a and 118b are provided with boss portions 31a and 31b, and small screws 32a and 32b are passed from the second cover portions 117b and 117c through the boss portions 31a and 31b to fasten the first cover portion 117a and the second cover portions 117b and 117c to the rotor unit 15. It should be noted that also the second cover portions 117b and 117c are fastened to the rotor unit 15 with small screws 34a and 34b passed through the boss portions 33a and 33b.
(b) As shown in Fig. 7, it is also possible to further provide a third cover portion 217e covering the first cover portion 217a, forming the second cover portion 217c and the first cover portion 217a in one piece, and forming the second cover portion 217b and the third cover portion 217e in one piece. In this case, the number of small screws that are exposed at the rear end of the rotor 3 can be reduced.
(c) In the preceding embodiments, the cover member 17 is made of an aluminum alloy or a stainless alloy, but it is also possible to make the cover member 17 from a fiber-reinforced synthetic resin that is reinforced by glass fibers or carbon fibers. In that case, an even lighter weight can be achieved while allowing the formation into any shape.
(d) In the preceding embodiments, the cover member 17 is mounted by fitting it to the rear of the rotor unit 15, but as shown in Figs. 8 and 9 as well as 10 and 11, it is also possible to mount it such that it overlaps with the rear portion of the rotor unit 115.
   In the embodiment shown in Figs. 8 and 9, the cover member 317 is provided with a step portion 317f. The step portion 317f overlaps with the rotor unit 115, covering the outer circumferential side of the rotor unit 115. It should be noted that in this embodiment, the rear end of the cylindrical portion 120 of the rotor unit 115 is not provided with a large-diameter portion, but the rear end of the cylindrical portion 120 is covered by the first cover portion 317a.
   Furthermore, in the embodiment shown in Figs. 10 and 11, the outer circumferential portion of the cylindrical portion 220 of the rotor unit 215 is provided with a step portion 215a, which is covered by the step portion 417f of the cover member 417. In this embodiment, the amount of protrusion to the outside can be made smaller than in the embodiment shown in Figs. 8 and 9.
(e) In the preceding embodiments, the cover member 17 is mounted to the rotor unit 15 by inserting small screws from the cover member 17 side (from the outer side). However, as shown in Fig. 12, it is also possible to mount the first cover portion 517a by inserting small screws 132a and 132b from the rotor 15 side. Also, in this embodiment, the second cover portion 517b is mounted to the arm portions 121b and 122b with a tongue-and-groove fitting, instead of small screws. That is to say, as shown in Figs. 12 and 13, the arm portions 121b and 122b are each provided with a pair of first and second protrusions 121c and 121d, and 122c and122d that are parallel to the rotation axis of the rotor 3. The protrusions 121c, 121d, 122c, and 122d protrude facing inward, in opposition to one another. On the other hand, coupling members 141, 142, 143, and 144, respectively having coupling grooves 141a, 142a, 143a, and 144a at a position at which the coupling members can be coupled with the protrusions 121c, 121d, 122c, and 122d are formed at the end of the second cover portion 517b, 517c of the cover member 517. The coupling members 141-144 protrude toward the arm portions 121b and 122b on the inner peripheral side at the end of the second cover portion 517b, 517c, and are provided in a pair, parallel to the rotation axis of the rotor 3. When mounting the cover member 517 to the rotor arm 15, the coupling members 141-144 are coupled with the rotor arm 15 in a sliding motion.
   Instead of this tongue-and-groove coupling, it is also possible to fasten the second cover portions 517b and 517c to the arm portions 121b and 122b with small screws from an inner peripheral side.
   With this configuration, there are no small screws or holes for attaching the small screws on the outer side of the cover member 517, so that the surface of the cover member 517 is smoother, its design is preferable, and furthermore, foreign matter such as dust does not adhere to it.
(f) In the preceding embodiments, the cover member 17 covers the entire lateral surface of the rotor unit 15, but it is also possible to devise it such that it covers only the first rotor arm 21.
(g) In the preceding embodiments, the first cover portion 17a is fastened with small screws 32a and 32b to the rotor unit 15, but as shown in Fig. 14, it is also possible to couple a coupling member 617g formed at the first cover portion 617a by elastic press-fitting with a counter-coupling portion 315b formed at the end of the rotor unit 315. In this case, the first cover portion 617a can be fixed easily and securely.
   In this embodiment, the first cover member 617a and the second cover portions 617b and 617c are formed in one piece. The second cover portions 617b and 617c can be fastened with small screws to the first arm portion 21b and the second arm portion 22b, or instead of with small screws, they can also be attached to the first arm portion 21b and the second arm portion 22b by tongue-and-groove fitting, as shown in Fig. 12. If the second cover portions 617b and 617c are attached by tongue-and-groove fitting, then the first cover portion 617a is coupled elastically by press-fitting to the rotor unit 315, and the second cover portions 617b and 617c, which are formed in one piece with the first cover portion 617a, are fitted by tongue-and-groove fitting in a sliding manner to the first arm portion 21b and the second arm portion 22b, so that the mounting of the first cover portion 617a and the second cover portions 617b and 617c is further facilitated. Furthermore, it is not necessary to provide small screws or holes for attaching the small screws, so that the overall configuration is simplified.
   Furthermore, as shown in Fig. 15, it is also possible to form the first cover portion 717a and the second cover portions 717b and 717c separately, to couple the first cover portion 717a by elastic press-fitting with the rotor unit 415, and further fasten it at two locations with small screws 35a and 35b. In this case, the first cover portion 717a is fastened even more securely. Furthermore, the first cover portion 717a can be provided with stopping portions 717h and 717i that are pressed down by the second cover portions 717b and 717c when mounting the second cover portions 717b and 717c, and that are formed protruding on the sides of the second cover portions 717b and 717c. In this case, the small screws 35a and 35b can be kept from standing out of the first cover portion 717a.
(h) A spool of spinning reel disclosed in this invention may be shaped as shown in Figs. 16 to 18.
   Shown in Fig. 16, the spool 104 is fitted via a drag mechanism 60 onto the front end of the spool shaft 12. The spool 104 includes a bobbin trunk 7 made of synthetic resin, front and rear flange portions 8a and 8b with a large diameter disposed to the both sides of the bobbin trunk 7, a skirt portion 9 extending rearward from an outer peripheral portion of the rear flange portion 8b, and a nut member 13 for fastening the rear flange portion 8b and the skirt portion 9 to the bobbin trunk 7.

The bobbin trunk 7 is made of a synthetic resin such as Nylon 66, which is mounted pivotably to the spool shaft 12 for winding fishing line around it. The bobbin trunk 7 is a cylindrical member, and the drag mechanism 60 is attached to its inner circumference. At the rear end of the bobbin trunk 7, a rearward-protruding male threaded portion 7a to which the nut member 13 is screwed is formed. The front end of the bobbin trunk 7 is formed in one piece with the front flange portion 8a. A cylindrical jacket member 14 is attached to the outer peripheral surface of the bobbin trunk 7. The jacket member 14 can be made, for example, of metal by press-forming a thin sheet material of 0.6 mm thick aluminum alloy. The jacket member 14 is provided to reinforce the bobbin trunk 7 made of synthetic resin and to improve its appearance. The front end of the jacket member 14 curves slightly upward to the front flange portion 8a. The jacket member 14 is formed in one piece with the rear flange portion 8b and the skirt portion 9, together forming a cylindrical shape with two different levels. Thus, by making the rear flange portion 8b and the skirt portion 9 from a thin sheet of light-weight metal, the weight of the spool 104 can be reduced, and an attractive appearance with metal luster can be attained. A through hole 14a for receiving a knot at the wind-starting end of the fishing line is formed near the rear flange portion 8b.

A drag sounding mechanism 93 that makes a sound when activating the drag mechanism 60 is fitted into the bobbin trunk 7. A pair of front and rear bearings 55 and 56 is fitted along an inner peripheral side of the bobbin trunk 7, and the bobbin trunk 7 is mounted rotatively on the spool shaft 12 via the bearings 55 and 56.

The front flange portion 8a is a brim-shaped member made of a synthetic resin formed in one piece with the bobbin trunk 7, as described below. A depression is formed at the outer peripheral portion of the front flange portion 8a that comes into contact with the fishing line, and a cover member 19 made by curling a (for example 0.6 mm thick) sheet of a hard metal, such as a stainless alloy, is fitted to it. The cover member 19 is mounted so as to protect from damage that portion of the relatively soft and easily damaged front flange portion 8a made of synthetic resin that comes in contact with the fishing line. The cover member 19 is bent over by curling from an outer front surface of the front flange portion 8a over an outer peripheral portion to an inner rear surface of the front flange portion 8a. The end of the rear surface of the cover member 19 abuts against the curved portion at the front of the jacket member 14.

It is also possible to prevent damage by providing the front flange portion 8a separately from the bobbin trunk 7 and making the entire flange portion 8a of a stainless alloy. However, if the entire front flange portion 8a is made of a stainless alloy, then the front flange portion 8a becomes heavy, which stands in the way of making the spool 104 lighter. To solve this problem, the cover member 19, which is made of a hard thin sheet material, covers that portion of the light-weight synthetic resin front flange portion 8a that comes into contact with the fishing line, thereby achieving a lighter weight while protecting the front flange portion 8a from damage, and maintaining the abrasion resistance and the durability of the front flange portion 8a.

The rear flange portion 8b is a disk-shaped portion, and the male threaded portion 7a of the bobbin trunk 7 protrudes from its rear end.

The skirt portion 9 is a cylindrical portion extending rearward from an outer peripheral portion of the rear flange portion 8b. The skirt portion 9 is provided with a stepped recess 9a, to which a fishing line lock 50 for locking the front end of the fishing line is attached. Between the recess 9a and the fishing line lock 50, there is a gap for clipping the fishing line.

The nut member 13 fastens the jacket member 14, the rear flange portion 8b and the skirt portion 9, which have been formed in one piece, to the bobbin trunk 7 by screwing them to the male threaded portion 7a. The nut member 13 is an elastic ring-shaped member made of a synthetic resin, at the center of which a female threaded portion 13a being screwed to the male threaded portion 7a is formed. Tool-interlock portions 13b for interlocking with a special tool for turning the nut member 13 is formed at the rear surface of the nut member 13 at a certain spacing in circumferential direction. The fishing-line lock 50, which is an elastically deformable component roughly T-shaped in lateral cross-section, is mounted to a projection 13c formed projecting on the rear end of the nut member 13, and is fastened by a pushnut 51 fitted over the tip of the projection 13c.

In the course of assembling a spool 104 with this configuration, the jacket member 14 is mounted to the bobbin trunk 7 when the cover member 19 has been fitted to the front flange portion 8a in a curling process during the manufacture. In this situation, the fishing line lock 50 is fastened to the nut member 13, the bobbin trunk 7 is rotated with respect to the nut member 13 to screw the male threaded portion 7a to the nut member 13, and the jacket member 14, the rear flange portion 8a and the skirt portion 9, which are formed in one piece, are fastened to the bobbin trunk 7.

In a spinning reel with this configuration, the front flange portion 8a of the spool 104 is made of a synthetic resin, and that portion of the front flange portion 8a that comes into contact with the fishing line is covered by a cover member 19, which is made of a hard thin sheet material, so that the front flange portion 8a can be made lighter while maintaining the abrasion resistance and the durability of the front flange portion 8a.

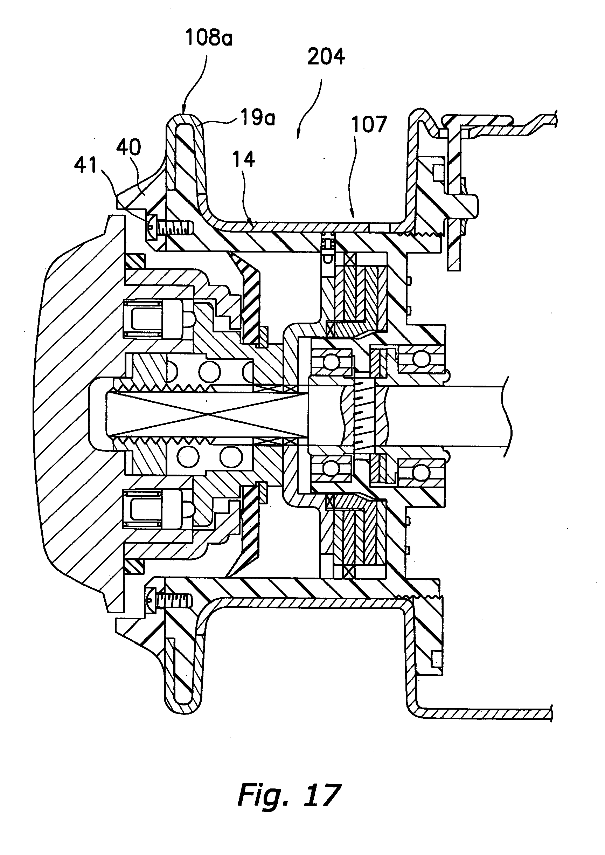

In the spool 104 shown in Fig. 16, the front end of the cover member 19 covering the front flange portion 8a was exposed, but in the spool 204 shown in Fig. 17, a level difference at the front end of a cover member 19a is covered by a fastened member 40.

In Fig. 17, the cover member 19a is bent over by curling from a front surface of the front flange portion 8a over an outer peripheral portion to an inner rear surface. The front surface of the cover member 19a is kept down by a fastened member 40. The end of the rear surface of the cover member 19a abuts against the curved portion at the front of the jacket member 14.

The fastened member 40 is fastened by a plurality of bolts 41 to the front end of the front flange portion 8a. With its rear surface, the fastened member 40 presses down the front surface of the cover member 19a. Pressing down and covering the front surface of the cover member 19a in this manner achieves that even if a level difference to the recess in the front flange portion 8a has been formed by curling the cover member 19a, the level difference becomes non-conspicuous, and the fishing line will not get caught in the level difference.

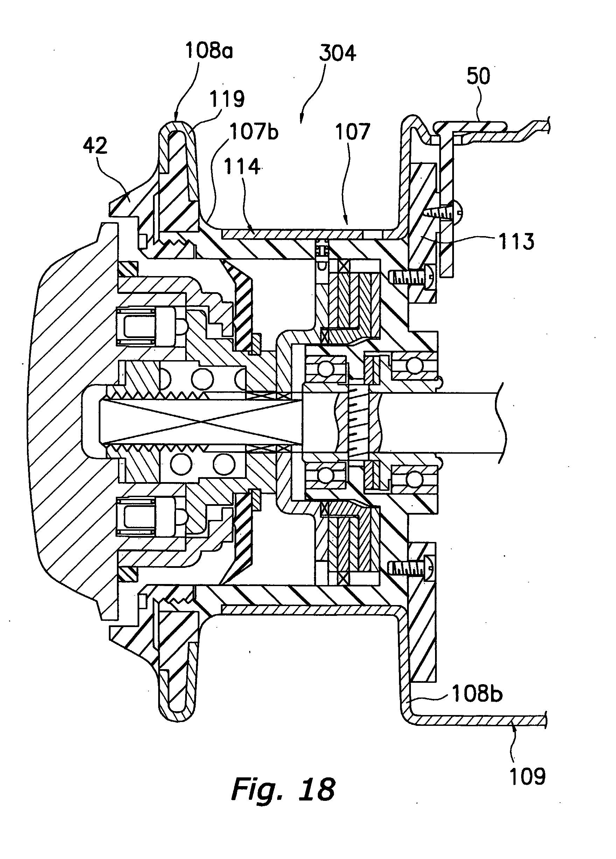

In the previous two type spools 104, 204, the front flange portion 8a is formed in one piece with the bobbin trunk 7, but as shown in Fig. 18, they can also be provided as separate components.

In Fig. 18, a front flange portion 108a is mounted to the outer peripheral side at the front of a bobbin trunk 107. A protrusion 107b is formed protruding outward at the front of the bobbin trunk 107, in order to position the front flange portion 108a and to provide a smooth joint with the front flange portion 108a. A presser ring 113 is fastened with screws to the rear surface of the bobbin trunk 107. The tip of the jacket-member 114 is not curved outward and is simply cylindrical.

The purpose of the presser ring 113 is to fasten the outer jacket member 114, the rear flange portion 108b and the skirt portion 109, which are formed in one component, to the bobbin trunk 107. The fishing line lock 50 is fastened by a screw to the presser ring 113.

The front flange portion 108a is mounted to the outer peripheral portion at the front end of the bobbin trunk 107, and is fastened to the bobbin trunk 107 by a flange fastening member 42 screwed to the inner periphery of the bobbin trunk 107. The cover member 119 is curved so that it covers the outer peripheral portion of the front flange portion 8a, and its front end is covered by the flange fastening member 42.

Where the front flange portion 108a is provided separately from the bobbin trunk 107 in this manner, then the portion of the front flange portion 108a that comes into contact with the fishing line is covered by a cover member 119, which is made by curling a hard thin sheet material, so that a lighter weight can be attained while maintaining the abrasion resistance and the durability of the front flange portion 108a.

With the present invention, at least the first rotor arm, on which forces on the rotor unit tend to act, is reinforced by a cover member, so that those forces are received by the cover member, and the walls can be made thinner, reducing the flexural strength of the rotor unit. Therefore, it is possible to make the rotor lighter while maintaining its strength.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

This application claims priority to Japanese Patent Applications No.2001-152267 and No.2001-157004. The entire disclosure of Japanese Patent Applications No. No.2001-152267 and No.2001-157004 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims and their equivalents.

## Claims

1. A rotor (3) for use in a spinning reel having a reel unit (2) and a spool (4), said rotor being rotatively attached to the reel unit and being for winding fishing line around the spool that can shift front and rear, said rotor comprising:
a rotor unit (15) including a cylindrical portion (20) that is made of synthetic resin and is rotatable with respect to the reel unit, and
first and second rotor arms (21,22) including first and second connection portions (21a, 22a) extending radially outward from opposing positions in an outer circumferential surface of a rear end of said cylindrical portion, and
first and second arm portions (21b, 22b) that extend frontward curving from said first and second connection portions and keeping a certain distance to said cylindrical portion;
a bail arm (16) for guiding fishing line to the spool with its first rotor arm side, said bail arm being mounted pivotably with respect to front ends of said first and second rotor arms; and
a cover member (17,117) for reinforcing said rotor unit, said cover member being made of a material that is stronger than that of said rotor unit, and disposed at least on an outer side of said first rotor arm such that a hollow can be formed inside.

2. The rotor according to Claim 1, wherein said bail arm includes
first and second bail support members (25,26) respectively mounted pivotably to the front ends of the first and second arm portions (21b, 22b) ;
a line roller (27) for guiding fishing line, which is mounted rotatively to a front end of said first bail support member; and
a bail (29), which connects said first bail support member and said second bail support member and guides fishing line to said line roller, wherein said cover member (17,117) is disposed on an outer side of said first connection portion (21a) and said first arm portion (21b) of said first rotor arm (21).

3. The rotor according to Claim 2, wherein said cover member (17, 117) is disposed also on an outer side of said second connection portion and said second arm portion (22b) of said second rotor arm (22).

4. The rotor according to any of Claims 1 to 3, wherein said cover member is formed such that said cover member also covers a rear surface of said cylindrical portion (20).

5. The rotor according to any preceding Claim, wherein said cover member is made of a metal.

6. The rotor according to Claim 5, wherein said metal is a stainless alloy.

7. The rotor according to Claim 5, wherein said metal is an aluminum alloy.

8. The rotor according to any of Claims 1 to 4, wherein said cover member is made of a fiber reinforced resin.

9. The rotor according to Claim 8, wherein said fiber is carbon fibers.

10. The rotor according to Claim 8, wherein said fiber is glass fibers.

11. A spinning reel, comprising:
a reel unit (2) ;
a rotor (3) according to any preceeding Claim rotatably mounted at a front of said reel unit; and
a spool (4) disposed at a front of said rotor, said spool being shiftable front and back with respect to said reel unit.
